# EUROPEAN PATENT APPLICATION

(11) **EP 4 800 431 A1**
(43) Date of publication of application: **02.09.2026**
(21) Application number: 26160467.2
(22) Date of filing: 24.02.2026
(51) Int. Cl.: G01S 7/41, G01S 13/86, G01S 13/89, G01S 13/931

(54) **POSE REFINEMENT FOR MULTIMODAL SENSOR INTEGRATION VIA LEARNED VELOCITY AND KINEMATIC REGULARIZATION**

(30) Priority: 28.02.2025 US 202519066507
(71) Applicant: Robert Bosch GmbH, 70442 Stuttgart (DE); Carnegie Mellon University, Pittsburgh, PA 15213 (US)
(72) Inventor: Chen, Chuhan, Pittsburgh, PA, 15213 (US); Huang, Tianshu, Pittsburgh, PA, 15213 (US); Prabhakara, Akarsh, Pittsburgh, 15217 (US); O'Toole, Matthew, Pittsburgh, PA, 15217 (US); Ramanan, Deva, Pittsburgh, PA, 15241 (US); Mummadi, Chaithanya Kumar, Coraopolis, PA, 15108 (US); Rowe, Anthony, Pittsburgh PA, 15217 (US)
(74) Representative: Isarpatent

(57) **Abstract**

Synchronized camera images and radar images are captured from a scene. A shared spatial representation of the scene is generated by encoding spatial features into a spatial hash table of a shared geometry encoder. The shared spatial representation is decoded using a geometry decoder to produce camera occupancy and radar occupancy values. Camera and radar poses are refined through an optimization process that estimates per-frame pose and velocity offsets. A normal multi-layer perceptron (MLP) is used to predict surface normals at spatial locations of the scene based on the shared spatial representation, and one or more bidirectional reflectance distribution function (BRDF) bases are used to model radar reflectance. Camera density and radar density values are generated using the BRDF bases and the predicted surface normals. Predicted camera images and radar images are rendered. The shared geometry encoder is optimized based on a multimodal loss function.

## Description

### CROSS-REFERENCE TO RELATED APPLICATIONS

This application is filed concurrently with U.S. application Serial No.19/066512, filed February 28, 2025, entitled "MULTIMODAL RADAR SIMULATION ENHANCED BY BRDF ENCODING AND CAMERA-DERIVED SURFACE NORMALS," and U.S. application Serial No.19/066606, filed February 28, 2025, entitled "UPSAMPLING RADAR VIA MULTIMODAL NEURAL FIELDS" the disclosures of which are hereby incorporated in their entireties by reference herein.

### TECHNICAL FIELD

Aspects of the disclosure generally relate to pose refinement for multimodal sensor integration via learned velocity and kinematic regularization.

### BACKGROUND

Neural Radiance Fields (NeRFs) leverage deep learning techniques, particularly coordinate-based neural networks, to synthesize highly detailed 3D scenes from 2D images. A multilayer perceptron (MLP) is trained to learn a volumetric scene representation by mapping spatial coordinates and viewing directions to color and density values. NeRFs may utilize differentiable volume rendering to supervise training, optimizing the network to reconstruct the scene from multiple viewpoints.

The Doppler Aided Radar Tomography (DART) technique extends NeRFs for implicit Doppler tomography, enabling novel view synthesis from radar data. Unlike traditional NeRFs, which rely on red-green-blue (RGB) images, DART reconstructs 3D dynamic scenes using radar echoes by leveraging Doppler shifts as an additional supervisory signal. This technique models the scene as a volumetric radiance field parameterized by a neural network, where Doppler information provides temporal and velocity constraints, aiding in the reconstruction of objects.

A BRDF is a concept in the study of light reflection and surface appearance. BRDF describes how light is reflected at an opaque surface by defining how much light is scattered in various directions given an incident light direction. The BRDF accounts for surface properties such as glossiness, roughness, and color, and is useful for simulating and rendering surface appearance in computer graphics.

### SUMMARY

In one or more illustrative examples, a computer-implemented method for training a multimodal scene reconstruction system includes receiving synchronized camera images and radar images captured from a scene; generating a shared spatial representation of the scene by encoding spatial features into a spatial hash table of a shared geometry encoder; decoding the shared spatial representation using a geometry decoder to produce camera occupancy and radar occupancy values; refining initial camera and radar poses through an optimization that estimates per-frame pose and velocity offsets; predicting, via a normal multilayer perceptron (MLP), surface normals at spatial locations of the scene based on the shared spatial representation; applying one or more bidirectional reflectance distribution function (BRDF) bases to model radar reflectance as a function of the predicted surface normals; applying a color MLP to the shared geometry encoder to determine camera radiance and applying a radar MLP to the shared geometry encoder to determine the radar reflectance using the BRDF bases and the predicted surface normals; optimizing the shared geometry encoder based on a multimodal loss function, wherein the multimodal loss function comprises a first reconstruction loss term for predicted camera images rendered from camera density and camera radiance, a second reconstruction loss term for predicted radar images rendered from radar density and radar reflectance, a proposal loss term to enforce consistency across multimodal ray samplings, a sparsity constraint to encourage compact geometry representations, a normal-supervision loss term that compares the predicted surface normals to pseudo-ground-truth normals derived from the camera images, and a pose refinement loss to optimize the pose and velocity offsets; and outputting the trained multimodal network for use in high resolution radar simulation in response to optimizing the multimodal loss function.

In one or more illustrative examples, the pose refinement loss includes *L*₂ regularization on the pose and velocity offsets.

In one or more illustrative examples, the pose refinement loss includes *L*₂ loss to enforce velocity towards derivate of position.

In one or more illustrative examples, the pose refinement loss includes *L*₂ regularization on acceleration.

In one or more illustrative examples, the pose refinement loss includes kinematic loss.

In one or more illustrative examples, the method further includes applying a transformation to the initial camera poses as derived from a structure-from-motion algorithm to estimate the initial radar poses, wherein the transformation accounts for time synchronization offsets between camera and radar modalities.

In one or more illustrative examples, the BRDF bases are further modeled as a function of one or more of viewing angle and a material roughness parameter.

In one or more illustrative examples, the method further includes generating the camera density and the radar density by applying a density decoding function to the spatial representation; rendering the predicted camera images from the camera density and camera radiance via camera volumetric rendering; and rendering the predicted radar images from the radar density and radar reflectance via radar volumetric rendering.

In one or more illustrative examples, the BRDF bases comprise exponential basis functions of a surface-normal dot-product, each basis function corresponding to a distinct surface-roughness parameter.

In one or more illustrative examples, the captured radar images include range-Doppler measurements, and the radar volumetric rendering integrates radar reflectance values along a conical integration path to account for Doppler shift effects.

In one or more illustrative examples, the spatial hash table stores geometry feature codes, and wherein the geometry decoder is a neural network that separately outputs camera density and radar density values from the shared geometry encoder.

In one or more illustrative examples, the method further includes training a proposal network to predict sampling distributions for radar and camera rays; and supervising the proposal network with a proposal loss function that penalizes underestimation of a true rendering weight distribution for both radar and camera modalities, wherein the proposal network generates separate sampling distributions for the radar and camera modalities while maintaining a shared feature representation for geometry.

In one or more illustrative examples, the method further includes one or more of removing noise artifacts from proposed radar images using a noise threshold determined from a chi-square distribution of empty Doppler bins; and evaluating model performance using peak signal-to-noise ratio (PSNR) and structural similarity index (SSIM) metrics.

In one or more illustrative examples, the shared geometry encoder is trained to optimize for both high-fidelity red-green-blue (RGB) image rendering and radar-specific depth and reflectance modeling without requiring explicit geometric supervision.

In one or more illustrative examples, the radar volumetric rendering computes radar return amplitudes by integrating over radar reflectance values weighted by the radar density and a learned radar gain function.

In one or more illustrative examples, the method further includes using the trained multimodal network to enhance object detection and depth estimation in autonomous vehicles by generating high-resolution radar reflectance maps.

In one or more illustrative examples, a system for training a multimodal network for multimodal scene reconstruction includes a memory configured to store synchronized camera images and radar images captured from a scene; and one or more computing devices configured to generate a shared spatial representation of the scene by encoding spatial features into a spatial hash table of a shared geometry encoder, decode the shared spatial representation using a geometry decoder to produce camera occupancy and radar occupancy values, refining camera and radar poses obtained using Structure-from-Motion (SfM) techniques through an optimization process that estimates per-frame pose and velocity offsets, predicting, via a normal MLP, surface normals at spatial locations of the scene based on the shared spatial representation, apply one or more BRDF bases to model radar reflectance as a function of the predicted surface normals, apply a color MLP to the shared geometry encoder to determine camera radiance and applying a radar MLP to the shared geometry encoder to determine the radar reflectance using the BRDF bases and the predicted surface normal, optimize the shared geometry encoder based on a multimodal loss function, wherein the multimodal loss function comprises a first reconstruction loss term for predicted camera images rendered from camera density and camera radiance, a second reconstruction loss term for predicted radar images rendered from radar density and radar reflectance, a proposal loss term to enforce consistency across multimodal ray samplings, a sparsity constraint to encourage compact geometry representations, a normal-supervision loss term that compares the predicted surface normals to pseudo-ground-truth normals derived from the camera images, and a pose refinement loss to optimize the pose and velocity offsets, and output the trained multimodal network for use in high resolution radar simulation in response to optimizing the multimodal loss function.

In one or more illustrative examples, the pose refinement loss includes *L*₂ regularization on the pose and velocity offsets.

In one or more illustrative examples, the pose refinement loss includes *L*₂ loss to enforce velocity towards derivate of position.

In one or more illustrative examples, the pose refinement loss includes *L*₂ regularization on acceleration.

In one or more illustrative examples, the pose refinement loss includes kinematic loss.

In one or more illustrative examples, the one or more computing devices are further configured to apply a transformation to the initial camera poses as derived from a structure-from-motion algorithm to estimate the initial radar poses, wherein the transformation accounts for time synchronization offsets between camera and radar modalities.

In one or more illustrative examples, the BRDF bases are further modeled as a function of one or more of viewing angle and a material roughness parameter.

In one or more illustrative examples, the one or more computing devices are further configured to generate the camera density and the radar density by applying a density decoding function to the spatial representation; render the predicted camera images from the camera density and camera radiance via camera volumetric rendering; and render the predicted radar images from the radar density and radar reflectance via radar volumetric rendering.

In one or more illustrative examples, the BRDF bases comprise exponential basis functions of a surface-normal dot-product, each basis function corresponding to a distinct surface-roughness parameter.

In one or more illustrative examples, the captured radar images include range-Doppler measurements, and the radar volumetric rendering integrates radar reflectance values along a conical integration path to account for Doppler shift effects.

In one or more illustrative examples, the spatial hash table stores geometry feature codes, and wherein the geometry decoder is a neural network that separately outputs camera density and radar density values from the shared geometry encoder.

In one or more illustrative examples, the one or more computing devices are further configured to train a proposal network to predict sampling distributions for radar and camera rays; and supervise the proposal network with a proposal loss function that penalizes underestimation of a true rendering weight distribution for both radar and camera modalities, wherein the proposal network generates separate sampling distributions for the radar and camera modalities while maintaining a shared feature representation for geometry.

In one or more illustrative examples, the shared geometry encoder is trained to optimize for both high-fidelity RGB image rendering and radar-specific depth and reflectance modeling without requiring explicit geometric supervision.

In one or more illustrative examples, the radar volumetric rendering computes radar return amplitudes by integrating over radar reflectance values weighted by the radar density and a learned radar gain function.

In one or more illustrative examples, the one or more computing devices are further configured to use the trained multimodal network to enhance object detection and depth estimation in autonomous vehicles by generating high-resolution radar reflectance maps.

In one or more illustrative examples, a non-transitory computer-readable medium includes instructions for training a multimodal scene reconstruction that, when executed by one or more computing devices, cause the one or more computing devices to perform operations including to generate a shared spatial representation of the scene by encoding spatial features into a spatial hash table of a shared geometry encoder; decode the shared spatial representation using a geometry decoder to produce camera occupancy and radar occupancy values; refining camera and radar poses obtained using Structure-from-Motion (SfM) techniques through an optimization process that estimates per-frame pose and velocity offsets; predicting, via a normal MLP, surface normals at spatial locations of the scene based on the shared spatial representation; apply one or more BRDF bases to model radar reflectance as a function of the predicted surface normals, a viewing angle, and a material roughness parameter; apply a color MLP to the shared geometry encoder to determine camera radiance and applying a radar MLP to the shared geometry encoder to determine the radar reflectance using the BRDF bases and the predicted surface normal; generate camera density and radar density by applying a density decoding function to the spatial representation; render predicted camera images from the camera density and camera radiance via camera volumetric rendering; render predicted radar images from the radar density and radar reflectance via radar volumetric rendering; optimize the shared geometry encoder based on a multimodal loss function, wherein the multimodal loss function comprises a first reconstruction loss term for the predicted camera images, a second reconstruction loss term for the predicted radar images, a proposal loss term to enforce consistency across multimodal ray samplings, a sparsity constraint to encourage compact geometry representations, a normal-supervision loss term that compares the predicted surface normals to pseudo-ground-truth normals derived from the camera images, and a pose refinement loss to optimize the pose and velocity offsets; and output the trained multimodal network for use in high resolution radar simulation in response to optimizing the multimodal loss function.

### BRIEF DESCRIPTION OF THE DRAWINGS

FIG. 1 illustrates an example of the operation of the RadarSim framework;
FIG. 2 illustrates an example apparatus for the capture of the video images and the radar images as well as lidar data;
FIG. 3 illustrates an example of data captures performed using the apparatus;
FIG. 4 illustrates further details of the RadarSim framework with enhanced radar reflectivity modeling by leveraging BRDF encoding aligned with surface normals and with pose and velocity refinement;
FIG. 5A illustrates an example classic specular reflectance model;
FIG. 5B illustrates an example radar reflectance model;
FIG. 6 illustrates various BRDF bases functions for different surface roughness values;
FIG. 7 illustrates example comparison of rendering radar reflectance on camera geometry, rendering radar reflectance on radar geometry, and baseline radar reflectance on the radar geometry;
FIG. 8 illustrates an example process for the training of the RadarSim framework;
FIG. 9 illustrates an example application of the RadarSim framework by a control system for controlling a computer-controlled machine; and
FIG. 10 illustrates a schematic diagram of the control system configured to control a vehicle.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

Radars are an ideal complement to cameras. Both are inexpensive, solid-state sensors. Cameras offer fine angular resolution, while radars provide absolute depth and robustness under adverse conditions. However, unlike camera images which can be interpreted as rays in space or lidar depth maps which can be interpreted as simple points, radar data, especially in raw, range-Doppler form, can be difficult to interpret in 3D space. This is due to reasons such as the radar data carrying both angular ambiguity and a range of cross-bin effects such as side lobes and bleed. Furthermore, since radar data is heavily sensor-dependent, radar processing algorithms cannot simply be tested (or trained) on generic radar data. This is in contrast to image data from cameras, where images can be scraped from the Internet or other sources.

Recently, vision-as-inverse graphics approaches inspired by Neural Radiance Fields (NeRFs) have shown promise. These approaches unify 3D reconstruction and simulation as a novel view synthesis problem and can accurately recover high-resolution radar geometry and simulate radar scans.

NeRFs learn an implicit neural field that can be used to differentiable render an image (or 2D pixel grid) by integrating volumetric radiance (or color) *c*(*x, ω*) ∈ [0,1]³ and density *σ*(*x*) ∈ *R* for each 3D point x and view direction *ω* along pixel-aligned ray *Y* [2]: $C \left(i, w\right) = c \left({x}_{i}, w\right) α \left({x}_{i}\right) {\prod }_{j < i} \left(1-α\left({x}_{j}\right)\right)$ $Y = {\sum }_{i} C \left(i, w\right)$ where *α* ∈ [0,1] are alpha-compositing weights equal to 1 *- e*^{*-σ*(*xᵢ*i)*δᵢ*} and *δᵢ* is the distance between adjacent samples on a ray.

Similarly, DART learns an implicit neural field that can be used to render radar measurements, which are naturally represented as a 3D cube of range, speed (or Doppler), and angle (or antenna) measurements. To do so, DART integrates volumetric reflectance *s*(*x, ω*) ∈ R and transmittance *t*(*x, ω*) ∈ [0,1], capturing the proportion of energy that reflects back and that continues past a point x. These quantities can be used to model the radar return amplitude at point sample *xᵢ = x + rᵢω* observed by a radar at position *x* with antenna *k,* written as *C*(*i, k, ω*): $C \left(i, k, ω\right) = \frac{{g}_{k}}{{r}_{i}^{2}} s \left({x}_{i}, ω\right) {\prod }_{j < i} t {\left({x}_{j}, ω\right)}^{2} ,$ where i is a discrete range bin. Comparing Equation (3) with Equation (1), transmittance can be seen as one minus alpha, but is squared since the radar signal is attenuated twice along the ray, during both the outgoing and incoming directions after reflection. The additional inverse squared fall-off captures the radiometric reduction of energy in the reflected signal, while the antenna-dependent gain factor *gₖ* captures the dependence of the observed signal on the orientation of radar array.

Instead of simply accumulating return values along a ray, range-Doppler measurements are generated for rendering the radar image. The Doppler speed of a scene point is its radial velocity relative to the radar. The apparent Doppler speed of static scene points captured from a moving radar depend on the viewing angle w and radar velocity *v*; scene points directly in front of a radar have an apparent speed of -∥*v*∥, but those off-center will have a cosine fall-off. Thus, to render a particular (range-Doppler) pixel for range bin *rᵢ* and Doppler speed *dⱼ*, one integrates samples that lie at the intersection of the cone of directions w (given a particular cosine fall-off of *dⱼ*) with a sphere of radius *rᵢ.* Geometrically, this intersection is a circle in 3D: $Y \left({r}_{i}, {d}_{j}, k\right) ∝ \frac{{r}_{i}}{{\left‖υ\right‖}_{2}} {\int }_{\left〈w, υ\right〉 = {d}_{j} , {\left‖w\right‖}_{2} = 1} C \left(i, k, w\right) dw$ where the additional factors correct for the varying width of the spherical (range-Doppler) bins.

DART relies solely on radar data, which has inherently low spatial resolution. This limitation prevents capturing fine geometric details, leading to blurred reconstructions and a loss of intricate features that cameras or LiDAR can easily capture. As a result, such approaches struggle with representing complex scene details, thereby limiting its suitability for high-fidelity novel view synthesis. Consequently, the radar-relevant geometry can be recovered but the overall reconstruction quality remains significantly inferior to state-of-the-art camera- and LiDAR-based techniques.

To overcome these limitations, and to bridge the gap between radar and camera-based reconstruction quality, this disclosure relates to a RadarSim framework. The RadarSim framework is a unified differentiable renderer that leverages the high angular resolution of cameras alongside radar's depth capabilities. RadarSim utilizes a differentiable multimodal scene representation to generate both RGB images and mmWave range-Doppler frames, enhancing geometry resolution through the high-detail RGB images while preserving and implicitly up-sampling the mmWave-specific properties captured by radar.

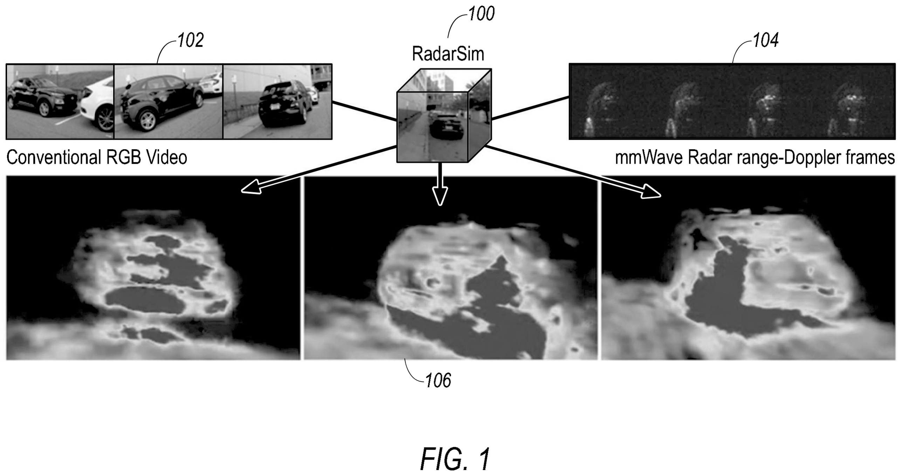

FIG. 1 illustrates an example of the operation of RadarSim framework 100. The RadarSim framework 100 receives RGB camera images 102 and corresponding radar images 104. Using these inputs, the RadarSim framework 100 learns spectral field models which enable super-resolution radar simulations 106, with much higher fidelity and interpretability than the Radar images 104 alone.

The camera images 102 refer to computer-readable image data representing various captured and/or simulated visual content. The camera images 102 may define an ordered sequence of still image frames at a frame rate (e.g., 24 frames per second, 30 frames per second, 60 frames per second, etc.) that when displayed by a screen, reproduce the visual content into the environment. The camera images 102 include pixel data formed at various resolutions (e.g., standard definition (SD), high definition (HD), full-HD, ultra-high definition (UHD), 4K, etc.), dynamic range (8 bits, 10 bits, or 12 bits per pixel per color, etc.), and frequencies and count of color channels (e.g., infrared, RGB, black & white, etc.).

The radar images 104 refer to computer-readable data representing electromagnetic wave reflections captured by radar sensors. These frames typically contain information about the distance, velocity, and angular position of detected objects relative to the radar sensor. The radar images 104 may be generated by frequency-modulated continuous wave (FMCW) radar, pulse-Doppler radar, or other radar technologies. Each radar frame consists of a collection of data points, often structured as a point cloud or a range-Doppler map, which can be analyzed to determine object characteristics. Radar images 104 may be captured at specific intervals corresponding to a defined frame rate, similar to video frames. The frame rate may range from a few frames per second (fps) to hundreds or even thousands of frames per second, depending on the radar system's resolution and application. The resolution of radar frames may be influenced by factors such as chirp bandwidth, antenna array configuration, and signal processing techniques.

The radar simulations 106 refers to the result of a process by which radar images 104 can be generated through radar volumetric rendering. In this technique, radar reflectance is rendered with radar occupancy from the point of view of a camera to form a high-resolution radar reflectance image. Further details of this rendering are discussed in detail herein.

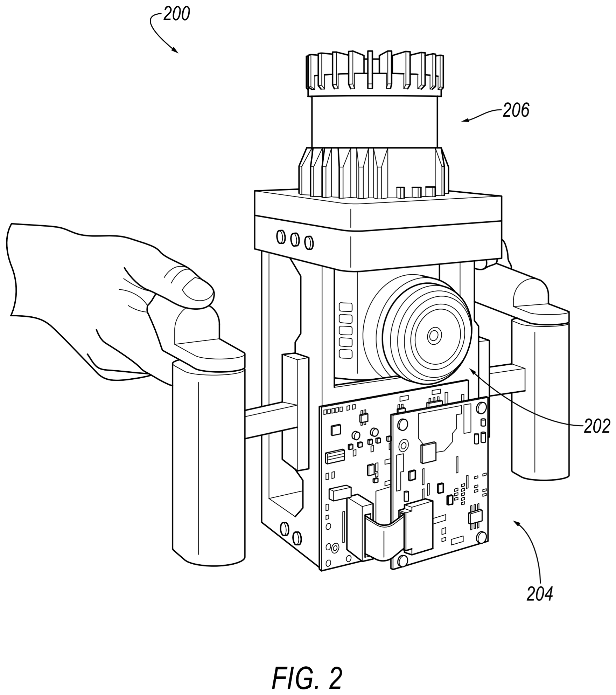

FIG. 2 illustrates an example apparatus 200 for the capture of the camera images 102 and the radar images 104 as well as lidar data. The apparatus 200 is a hand-held rig that includes a fisheye camera 202, a mmWave radar 204, and a lidar 206. The apparatus 200 may accordingly be used for data collection with time-synced mmWave radar images 104, RGB camera images 102, and optionally in combination lidar data (e.g., at 30 fps, 30 fps and 10 fps respectively).

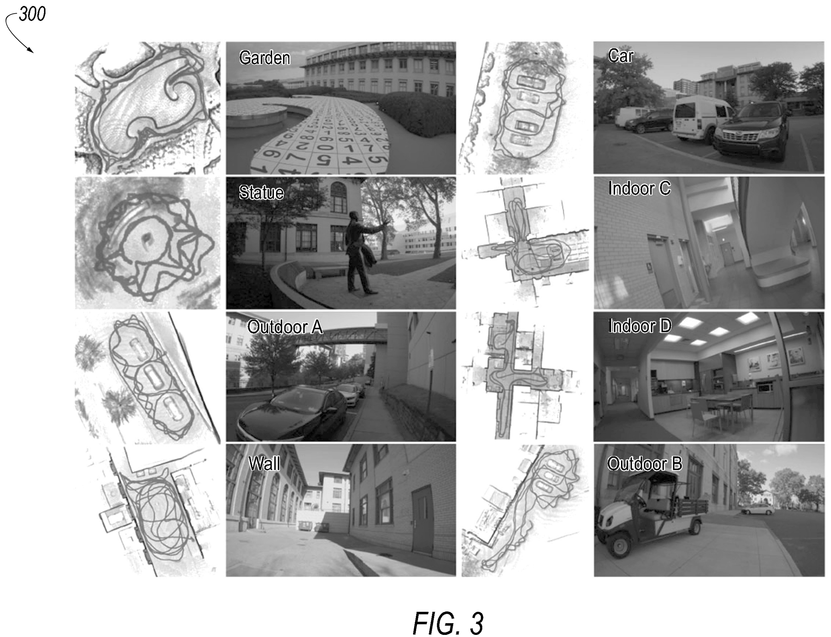

FIG. 3 illustrates an example 300 of data captures performed using the apparatus 200. Eight evaluation traces are shown for eight different scenes, shown as the paths taken by carrying the apparatus 200 through various environments to capture corresponding camera images 102 and radar images 104. These evaluation scenes include a garden scene, a statue scene, outdoor A scenes (a first outdoor scene), a walls scene, a cars scene, indoor C (an indoor scene), indoor D (another indoor scene), and outdoor B (another outdoor scene). For each of these eight scenes, the trajectory taken by the apparatus 200 is shown, along with a lidar map of the scene and an RGB view. The number of camera images 102 and the radar images 104 range from 2000 to 3000 per scene. The camera image 102 size used for training may be 960 x 540 pixels (px), but different sizes may be used.

COLMAP is a general-purpose, end-to-end image-based 3D reconstruction pipeline. COLMAP may be used to perform task such as Structure-from-Motion (SfM) and Multi-View Stereo (MVS)). For each scene, COLMAP may be used to obtain camera poses *A_{c}* (which may be broken down into camera rotation *R_{c}* and camera position *x_{c}*). Since the coordinate systems of the camera 202 and the radar 204 may be calibrated, the camera poses *A_{c}* may be algorithmically converted into radar poses *Aᵣ* (which may be broken down into radar rotation *Rᵣ* and radar position *xᵣ*) by interpolating into the sequence of camera poses *A_{c}* with synced-timestamps followed with a transformation. Since COLMAP does not provide scale, the lidar 206 may be utilized for scale estimation after capturing a set of poses with metric scale from a running cartographer on lidar 206 scans. The lidar 206 scans in the pipeline can be easily removed and replaced with a metric scale estimation module given consistent poses and radar frames which contain metric depth information. While COLMAP provides fairly accurate poses, radar ray tracing requires accurate velocity. Thus, as discussed herein, a pose and velocity refinement may be utilized.

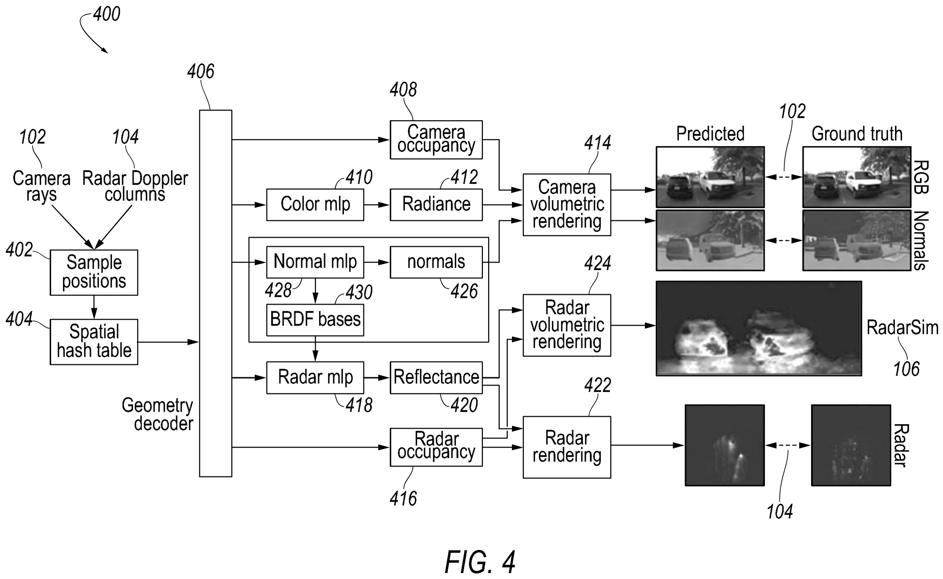

FIG. 4 illustrates further details 400 of the RadarSim framework 100 with enhanced radar reflectivity modeling by leveraging BRDF encoding aligned with surface normals and with pose and velocity refinement. As shown, the RadarSim framework 100 receives the camera images 102 (e.g., camera 202 rays) and the radar images 104 (e.g., radar 204 doppler columns). These multiple modalities are captured for corresponding sample positions 402 and are used to generate a spatial hash table 404. The spatial hash table 404 may be provided to a geometry decoder 406. The geometry decoder 406 may provide input to determine camera occupancy 408 and also provide input to a color MLP 410 to generate radiance information 412. The camera occupancy 408 and the radiance information 412 may be input to a camera volumetric rendering 414 which may produce predicted camera images 102 that may be compared to ground truth camera images 102. The geometry decoder 406 may also provide input to determine radar occupancy 416 and be input to a radar MLP 418 to determine reflectance information 420. The radar occupancy 416 and the reflectance information 420 may be provided to a radar rendering 422 to produce predicted radar images 104 which may be compared to ground truth radar images 104. The radar occupancy 416 and the reflectance information 420 may also be provided to a radar volumetric rendering 424 to produce the radar simulations 106. Thus, using the radar volumetric rendering 424, radar 204 reflectance is rendered with radar occupancy 416 from camera 202 point of view to form high-resolution radar 204 reflectance images.

The sample positions 402 refers to the different data captures from the camera 202 and the radar 204 that are used as input to the RadarSim framework 100. The RadarSim framework 100 processes radar raw data into Range-Doppler-Azimuth frames (e.g., with dimension size 128, 128, 8). At each training iteration, a batch of radar Doppler columns *Yᵣ* and a batch of pixels *Y_{c}* are sampled to form radar rays and RGB rays respectively. The RGB rays may be determined by camera pose *A_{c}.* The radar rays may be sampled on a cone with direction determined by the velocity of the sensor at current frame, and apex angle determined by the dot product between speed and Doppler value of the sampled column.

While mmWave radar and RGB cameras largely share the same underlying spatial geometry, their properties can differ significantly. For example, while glass is opaque to mmWave radars, other surfaces such as plastic bodywork and thin walls are transparent. As such, a radar-camera reconstruction must share geometry between camera images 102 and radar images 104 while still allowing these two modalities to differ when required.

One key insight is that explicit shared geometry is not required to share spatial information. Instead, implicit geometry sharing via the information bottleneck is provided by a shared field representation which allows for synergy between radar and camera reconstructions without compromising the unique qualities of both. This is accomplished using a unified geometry encoder which comprises the spatial hash table 404 and the geometry decoder 406.

The RadarSim framework 100 builds upon DART, which can be viewed as a modification of NeRF for radar. Intuitively, one can view RadarSim as a unification of DART for radar and NeRF for RGB. Given a static scene captured by camera images 102 and radar images 104, a unified neural field is learned that stores volumetric quantities that enable rendering of both RGB and radar (range-Doppler) views. However, combining both modalities is challenging. Modeling radar requires fundamentally different sampling strategies, since range Doppler pixel measurements are generated by integrating along a circle in space rather than a ray (since radar waves propagate radially rather than along rays). Moreover, radars process electromagnetic spectra at millimeter wavelength, while visible light consists of spectra at nanometer wavelengths. This can cause dramatic differences in wave propagation across space and wave reflection at surfaces, which is in fact one of the reasons that radar is so effective in particular weather conditions.

To capture such differences in a unified architecture, a multimodal neural field is learned where geometry is softly shared across modalities, but reflectance is not. Specifically, the unified geometry encoder is learned to make use of a unified proposal network for generating samples across both modalities. Moreover, the RadarSim framework 100 allows for separate reflectance heads to model the distinct reflectance properties of radar versus RGB measurements.

Referring more specifically to the RadarSim framework 100, the RadarSim framework 100 builds a unified implicit neural field that generates volumetric geometry and reflectance quantities (via multi-task heads) to both render images and range-Doppler sensor measurements. One extreme implementation of such a multi-task model is simply learning two neural fields with no sharing. However, this would not allow for radar reconstruction to benefit from image measurements. Instead, the RadarSim framework 100 learns a shared geometry encoder.

To do so, the RadarSim framework 100 reconciles an inconsistency between the two formulations: unlike NeRF (Equation 1), which fully separates geometry and radiance, DART implicitly captures scene geometry in its reflectance *s*(*xᵢ, ω*) as well (Equation 3). To address this, the RadarSim framework 100 separates reflectance into a geometry-independent reflectance term *cᵣ*(*x, ω*) that captures how much energy is reflected (akin to radiance in NeRF) and a geometric-only term capturing radar-specific density *αᵣ(x)* that is equivalent to 1 - *t*(*x, w*). This allows (Equation 3) to be rewritten in a form analogous to (Equation 1): $C \left(i, k, w\right) = \frac{{g}_{k}}{{r}_{i}^{2}} {c}_{r} \left({x}_{i}, w\right) {α}_{r} \left({x}_{i}\right) {\prod }_{j < i} {\left(1-{α}_{r}\left({x}_{j}\right)\right)}^{2} ,$

Given the modified formulation shown in (Equation 5), the shared geometry encoder may be more formally defined. A neural field may be learned as follows: $\left({α}_{r}\left({x}_{i}\right),{α}_{c}\left({x}_{i}\right),{l}_{geo}\right) = {f}_{geo} \left({x}_{i}; {θ}_{geo}\right)$ in the form of multi-resolution spatial hash table 404 that stores shared geometry codes *l*, which are MLP-decoded into radar density *αᵣ*(*x*) and camera density *α_{c}*(*x*), which is shown as the geometry decoder 406. To ensure maximal sharing, the density heads of the are implemented as linear layers atop the shared MLP geometry decoder 406.

The RadarSim framework 100 also models geometry for radar 204 and camera 202 with two different but related quantities: radar occupancy 416 and camera occupancy 408. These occupancies are derived from radar density and camera density by multiplying them with sample distances. Geometry differences when modelling may be due to factors such as: (i) different transmissiveness due to different wavelengths, and (ii) inter-reflections which creates fake geometry behind true surfaces as rays travel longer than the distance to the first bounce point. The geometry decoder 406 decodes camera density and a camera density offset, which are summed to form the radar density. This accounts for the difference between radar and camera geometry (or ray attenuation) while using camera density as an initialization.

Turning to radar ray sampling, performance of NeRF architectures may be attributed to efficient importance sampling on ray-surface intersections. Combining radar with RGB camera becomes challenging when radar ray termination and camera ray termination are different. Extending on techniques that generate samples from density stored in a lightweight network self-supervised by the rendering weight of NeRF, the proposal network can be shared between radar and camera, and may be supervised with rendering weight distribution of both camera and radar. While in DART, samples on radar rays are generated linearly according to range bins, the RadarSim framework 100 generates samples based on the sampling distribution from the proposal network, and queries *f_{geo}* and *f_{radar}* to obtain *αᵣ* and *cᵣ* for each sample on a ray. In case there are multiple samples assigned to a particular range bin, the samples are aggregated by taking the mean of the sample values; and if there are no samples, 0 is assigned for *αᵣ* and *cᵣ*.

The camera volumetric rendering 414 produces predicted camera images 102. To do so, a camera ray batch is sampled using a camera proposal sampler. The camera volumetric rendering 414 queries the multiresolution spatial hash table 404, whose features are decoded with the density MLP of the geometry decoder 406 into camera density and a geometry code. This camera density and geometry code information is fed into the color MLP 410 with a per-frame appearance code to obtain the radiance information 412. The Pixel values *Ŷ_{c}* of the predicted camera images 102 can then be synthesized by volumetric rendering of color using density.

The radar rendering 422 produces predicted radar images 104. To do so, a radar ray batch is sampled using a shared radar proposal sampler which outputs different sampling weights from the camera proposal sampler. The same hash table 404 and density MLP of the geometry decoder 406 is queried to obtain camera density and an offset to the camera density which add up to form the radar density. The same geometry code is also decoded and fed to the radar MLP 418 along with spherical harmonic (SH) encoded view directions to decode into radar reflectance information 240. The radar reflectance information 240 and radar density are assigned to each range bin and rendered with DART rendering equation to synthesize the input Doppler column *Ŷᵣ*.

The radar volumetric rendering 424 may be performed as a high-resolution radar simulator by volumetrically rendering radar reflectance through camera views. It is possible to render radar reflectance on both learnt radar geometry and camera geometry: former produces geometry that reproduces radar input but sometimes at a cost of faking geometry to account for interreflections, while later shows more detailed geometry and provide more clear visualization of normal-dependent reflectance.

Regarding loss functions used for the training, the multimodal model is supervised with *L*₂ reconstruction loss for RGB, *L*₁ reconstruction loss for radar, and interlevel loss for self-supervising proposal network. The RGB and radar loss functions may be as follows: $Reconstruction loss for RGB : {L}_{c} = {\left‖{Y}_{c}-{\hat{Y}}_{c}\right‖}_{2}^{2}$ $Reconstruction loss for radar : {L}_{r} = {\left‖{Y}_{r}-{\hat{Y}}_{r}\right‖}_{1}$

Turning to the interlevel loss, the shared proposal sampler is supervised for radar and RGB with a proposal loss *Lₚᵣₒₚ*(*t, w, t̂, ŵ*) to encourage histogram of rendering weights *ŵ* queried from the proposal network at samples *t̂* to match the rendering weight w of the geometry field at a set of different sample positions 402, *t̂*, as set forth in (Equation 9) below: ${L}_{prop} \left(t, w, \hat{t}, \hat{w}\right) = {\sum }_{i} \frac{1}{{w}_{i}} max \left(0,{w}_{i}-bound\left(\hat{t}, \hat{w}, {T}_{i}\right)\right)$ where *bound*(*t̂, ŵ, Tᵢ*) is the sum of proposal weights *ŵ* in interval *i.*

This loss function penalizes the proposal weights that under-estimates the rendering weight distribution from geometry field. Instead of applying this loss function only to the camera (e.g., RGB) modality, the RadarSim framework 100 applies this loss to both radar and camera as *L_{propᵣ}* and *L_{prop_{c}}.* This is done to enforce the proposal network to generate two set of sampling weights that focus on both camera and radar geometry respectively. Radar rendering 422 weights are computed by: ${w}_{r} = {α}_{r} \left({t}_{i}\right) {\prod }_{j < i} \left(1-{α}_{r}\left({t}_{j}\right)\right)$ And RGB rendering weights: ${w}_{c} = {α}_{c} \left({t}_{i}\right) {\prod }_{j < i} \left(1-{α}_{c}\left({t}_{j}\right)\right)$

The combined loss *L_{multimodal}* is therefore: ${L}_{multimodal} = {L}_{c} + {λ}_{r} {L}_{r} + {λ}_{{prop}_{r}} {L}_{{prop}_{r}} + {λ}_{{prop}_{c}} {L}_{{prop}_{c}} + {λ}_{dist} {L}_{dist}$ where *L_{dist}* is adapted from on camera density to encourage sparsity. In an example, *λᵣ =* 1*e* - 3 for outdoor scenes and *λᵣ* = 1*e* - 4 for indoor scenes where abundance of multi-path reflections results in overall high reflectance in the scenes. In some examples, default values are used in Nerfstudio with *λ_{propᵣ} =* 1.

Thus, a multimodal sensor fusion combining radar with high-angular-resolution RGB cameras may be used to enhance radar resolution. However, accurately modeling radar reflectivity under various surface conditions may be difficult. One issue is the accurate modeling of radar's specular reflectance properties, particularly for retroreflective surfaces such as metals and other glossy materials. This phenomenon is highly view-dependent and are strongly influenced by surface normal, an aspect that has not been explored in previous radar reconstruction frameworks like DART.

As noted above, enhanced radar reflectivity modeling may be performed by leveraging BRDF encoding aligned with surface normals 426. The surface normals 426 may be derived from high-angular-resolution geometry provided by camera inputs. The BRDF that is widely used in computer graphics and also in NeRF-based approaches offers a promising approach to bridge this gap by explicitly modeling the angular dependencies of surface reflectivity. The RadarSIM framework 100 may be enhanced for encoding surface normals 426 to accurately represent radar reflectivity across various materials and viewing angles. This representation may be integrated with the camera-radar multimodal sensor fusion to improve radar simulation across novel angles.

While the effect of surface normals 426 manifest differently in radar and camera readings, they are related to the underlying geometry. This provides an opportunity for information sharing between the modalities. By representing the radar's view-dependence using a BRDF relative to a (learned) surface normal, the RadarSim framework 100 can more accurately represent specular surfaces, while better generalizing these specular surfaces to novel angles. Radar tends to reflect across metallic surfaces with strong view-dependence; thus RadarSim framework 100 models the specular reflection (that depends upon both the viewing direction and surface normal) via BRDF basis functions, leveraging techniques for implicit BRDF modeling.

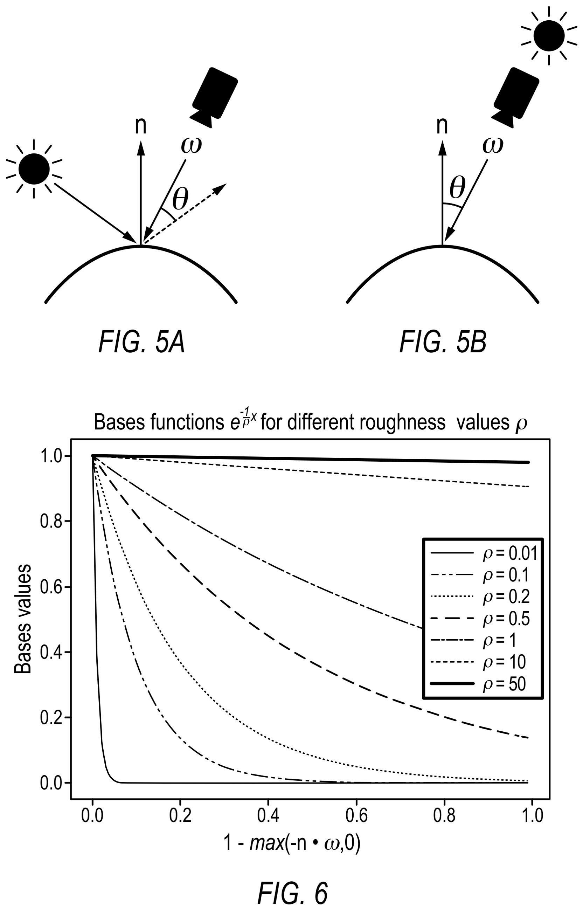

Referring back to the geometry-independent reflectance term *cᵣ*(*x, ω*) from (Equation 5), further improvements to the radar reflectance model *cᵣ*(*x, ω*) may be made that leverage improved estimates of geometry. A reason for the improvement is that many metallic surfaces appear highly specular under radar due to its large wavelength, a phenomenon sometimes known as retroreflectance. A key insight here is to repurpose innovations from NeRF architecture on capturing surface reflectance models (e.g., BRDFs), to better model retroreflectance common in radar sensing. To do so, the model shown in FIG. 4 is updated as shown in FIG. 5 to explicitly reason about surface normals 426 and surface roughness.

A surface normal 426 is a vector that is perpendicular (or orthogonal) to a surface at a given point. In other words, one imagines a flat, tangent plane resting on the surface at that point, the surface normal would be in the direct straight up out of that plane. In principle, one could derive surface normal 426 maps by computing the spatial gradient of the geometric density model. In practice, such estimates are noisy. Instead, a normal MLP 428 is learned that predicts the surface normal 426, which is supervised with surface normals 426 predicted from a monocular normal predictor on the input camera images 102.

View dependence of the radar reflectance information 420 can be broken into two scenarios, surface normal 426 dependent reflectance and surface normal 426 independent reflectance. The latter includes reflectance from retro-reflectance structures such as corners, bottom of car, etc., where ray always bounces back for in a particular direction, and inter-reflections. To model these two scenarios, the input to the Radar MLP 418 is augmented with BRDF bases 430 to model normal dependent view dependence, and spherical harmonics encoded view directions to model normal independent view dependence. Geometry code is also input to the Radar MLP 418 as for both type of reflections is spatially varying. Thus, the geometry code is also decoded and fed to the radar MLP 418 along with SH encoded view directions and the BRDF bases 430 to decode into radar reflectance information 420.

FIG. 5A illustrates an example classic specular reflectance model. This may be a model, such as Phong shading, where the strength of the viewed specularity depends on the angle between the viewing direction and the reflected light source, e.g., reflected about the surface normal 426. Regarding surface roughness, classic models of specularity compute the dot product between the viewing angle and angle of reflectance from an incident light source, where the angle of reflectance is computed by mirror-flipping the incident angle across a surface normal 426.

FIG. 5B illustrates an example radar reflectance model. As compared to FIG. 5A, this model may make use of co-located transmitters and receivers, implying the brightness of specular retroreflectors will be determined by the angle between the viewing direction and surface normal 426. For radars, where mmWave transmitters and receivers are collocated, the viewing and source angle are identical, implying that the crucial quantity of interest is the dot product between the viewing angle *ω* and surface normal *n.* Retroreflective surfaces generate strong returns when viewed fronto-parallely, with a response that falls when viewed off-angle.

FIG. 6 illustrates various BRDF bases 430 functions ${e}^{- \frac{1}{ρ} x}$ for different surface roughness values *p.* As shown, the example values of *p* range from 0.01 to 50. To capture different rates of fall off, spectral basis functions may be used as follows: ${β}_{ρ} \left(ω.n\right) ≡ {e}^{- \frac{1}{ρ} \left(1-max\left(-ω.n,0\right)\right)} , ρ ∈ P$ The final model of radar reflectance information 420 may therefore be defined as follows: ${c}_{r} \left({x}_{i}, ω\right) = {f}_{radar} \left({l}_{geo}, \left\{{β}_{ρ}\left(ω.n\right)\right\}, ω, {θ}_{radar}\right)$

As mentioned earlier with respect to (Equation 12), the multimodal model is supervised with *L*₂ reconstruction loss for RGB, *L*₁ reconstruction loss for radar 204 and interlevel loss for self-supervising proposal network. By integrating the normal MLP 428 into the RadarSIM framework 100, the model is further supervised with normal prediction loss.

Regarding normal supervision losses, the normal MLP 428 prediction is supervised with pseudo ground truth normal *n_{gt}* from a monocular normal estimator by first converting it to world coordinate using camera extrinsics *A_{c}:* ${L}_{norm} = {\left|\left|n-{A}_{c}{n}_{gt}\right|\right|}_{2}^{2}$ The surface normal 426 supervision loss *Lₙₒᵣₘₐₗ* for the normal MLP 428 is thus: ${L}_{normal} = {λ}_{norm} {L}_{norm} + {λ}_{{norm}_{g}} {L}_{{norm}_{g}} + {λ}_{{norm}_{o}} {L}_{{norm}_{o}}$ where *L_{norm_{g}}* + *L_{normₒ}* are adapted to guide the predicted surface normals 426 with gradient direction of the camera density field and encourage surface normals 426 to point outward from a surface.

Moreover, multimodal pose refinement may further be performed. While COLMAP provides fairly accurate poses, radar ray tracing requires accurate velocity, a pose and velocity refinement may be performed by learning a per-frame pose and velocity offset Δ*x_{c}*, Δ***R**_{c}*, Δ*v_{c}* and regularized through the following:
*L*₂ regularization on the offsets: ${L}_{regp} = {\left|\left|Δ{x}_{c}\right|\right|}_{2}^{2} + {\left|\left|Δ{R}_{c}\right|\right|}_{2}^{2} + {\left|\left|Δ{v}_{c}\right|\right|}_{2}^{2}$
*L*₂ loss that enforces velocity to be close to derivate of position: ${L}_{regv} = {\left|\left|\frac{d \left({x}_{c}\right)}{dt}-\left({v}_{c}+Δ{v}_{c}\right)\right|\right|}_{2}^{2}$
*L*₂ regularization on acceleration: ${L}_{rega} = {\left|\left|\frac{d \left(Δ{v}_{c}+{v}_{c}\right)}{dt}\right|\right|}_{2}^{2}$
Kinematic loss: ${L}_{regk} = {\left‖\frac{d \left({x}_{c}+Δ{x}_{c}\right)}{dt}-\frac{d \left(\int \left(Δ{v}_{c}+{v}_{c}\right)dt\right)}{dt}\right‖}_{2}^{2}$

It should be noted that it is possible to derive optimized velocity from optimized positions (*x* + Δ*x*), but empirically it can be found to be more stable to keep a different set of velocity offset and position offset and have them loosely connected through regularization. Such pose optimization scheme is shared across camera and radar as radar pose and velocity can be interpolated from camera poses and velocities.

In the light of this, the model may be further supervised with the auxiliary losses introduced for pose regularization. ${L}_{pose} = {λ}_{regp} {L}_{regp} + {λ}_{regv} {L}_{regv} + {λ}_{rega} {L}_{rega} + {λ}_{regk} {L}_{regk}$ where the weighted factors may be set as follows: *λ_{regp} =* 1*e*⁻³, *λ_{regv} =* 1, *λ_{rega} =* 5*e*⁻³, *λ_{regk} =* 1.

Therefore, the new combined loss *L* is: $L = {L}_{multimodal} + {L}_{normal} + {L}_{pose}$ In some examples, *λₙₒᵣₘ =* 0.1 to obtain strong supervision from ground truth surface normal 426. In some examples, default values in Nerfstudio are used with *λ_{propᵣ} =* 1, *λ_{norm_{g}} =* 1^{*e*-3}, *λ_{normₒ} =* 1^{*e*-4}, and *λ_{dist}* = 2^{*e*-3}. For pose refinement, the following may be used: *λ_{regₚ} =* 1^{*e*-3}, *λ_{regv}* = 1, *λ_{rega} =* 5^{*e*-3}*, λ_{regk} =* 1.

As an example implementation, the pipeline may be performed using Pytorch in Nerfstudio based on Nerfacto-big. For training a single 24 gigabyte (GB) Nvidia Rtx3090 graphics processing unit (GPU) may be utilized. In such a setup each sequence may be trained for 30k iterations and training time is around 2 hours. Learning rate for the model is 1^{*e*-2} annealed to 1^{*e*-4} after 30k steps, and for pose refinement is 1^{*e*-3} annealed to 1^{*e*-3} after 5k steps. An example list of model hyperparameters is shown in Table 1.

**Table 1 - Example Model Hyperparameters**

| Model | Configuration | Value |
|---|---|---|
| SH | degree | 25 |
| BRDF bases | number | 11 |
| Proposal Hash Encoding level 0,1 | # of levels | 5, 5 |
| | Hash table size | 2^17, 2^17 |
| | # of feature dim. per entry | 2, 2 |
| | Coarse resolution | 16, 16 |
| | Fine resolution | 128, 256 |
| | Decoder feature dim | 16, 16 |
| | Number of layer | 2, 2 |
| | # of ray samples | 512, 256 |
| Hash Encoding | # of levels | 16 |
| | Hash table size | 2^21 |
| | # of feature dim. per entry | 2 |
| | Coarse resolution | 16 |
| | Fine resolution | 2048 |
| | # of ray samples | 64 |
| Density MLP | # of hidden layers | 2 |
| | # of neurons per layer | 128 |
| | Output activation | Exp |
| | Density feature dim | 15 |
| Radar MLP | # of hidden layers | 2 |
| | # of neurons per layer | 128 |
| | Output activation | None |
| Normal MLP | # of hidden layers | 2 |
| | # of neurons per layer | 64 |
| | Output activation | None |
| Color MLP | # of hidden layers | 2 |
| | # of neurons per layer | 128 |
| | Output activation | Sigmoid |

To implement the baseline, the pytorch version of DART may be run with parameters for the spatial hash table 404 and the geometry decoder 406 set to match the size of RadarSim. The same set of poses for radar may be used for the baseline and our approach, where they are time-interpolated from COLMAP-derived camera poses.

To perform the evaluation metric and denoising procedure, peak signal-to-noise ratio (PSNR) and structural similarity index (SSIM) values are calculated between RadarSim and Ground truth for evaluation and comparison against the baseline. Because most of a radar frame consists of noise, a denoising procedure may be performed by finding the noise threshold for each dataset. The noise threshold may be calculated by fitting a chi-square distribution to the empty Doppler columns of each dataset (where speed is smaller than the Doppler values) and take a p-value of 0.01 of the noise distribution as the noise threshold. During evaluation, ground truth and synthesized range-Doppler frames are clipped at 0.01 and 99.99 percentile of the ground truth over the entire dataset and normalized to 0 and 1 to calculate SSIM and PSNR. Areas where the ground truth frames are below this threshold are ignored during both PSNR and SSIM calculation.

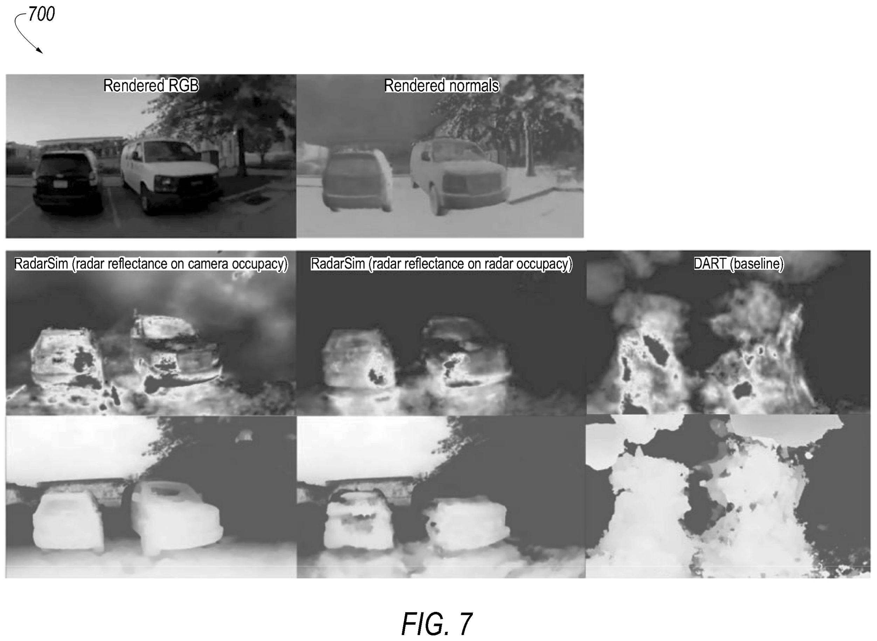

FIG. 7 illustrates example comparison 700 of rendering radar reflectance on camera geometry (left), rendering radar reflectance on radar geometry (middle), and baseline radar reflectance on the radar geometry (right). As shown, a high-resolution radar simulator may be created by volumetrically rendering radar reflectance through camera views. It is possible to render radar reflectance on both learnt radar geometry and camera geometry: the former produces geometry that reproduces radar input but sometimes at a cost of simulating geometry to account for interreflections, while the latter shows more detailed geometry and provide more clear visualization of normal-dependent reflectance.

It can be seen that because RadarSIM framework 100 is modelling different geometry for camera and radar, it can accurately be modeled where radar transmits through is material such as glass, reflectance can be recreated due to inter-reflection on the ground, albeit at a potential cost of less sharp and sometimes incorrect geometry such as reflection of object underground to recover input radar signal. Table 2 illustrates an aggregated quantitative comparison between the RadarSIM framework 100 and baseline, as well as ablation on BRDF.

**Table 2 - Aggregated quantitative comparison between RadarSim and Baseline**

| | SSIM | PSNR |
|---|---|---|
| DART | 0.805 | 28.4 |
| RadarSim | 0.817 | 28.9 |
| RadarSim w/o bases | 0.802 | 28.8 |

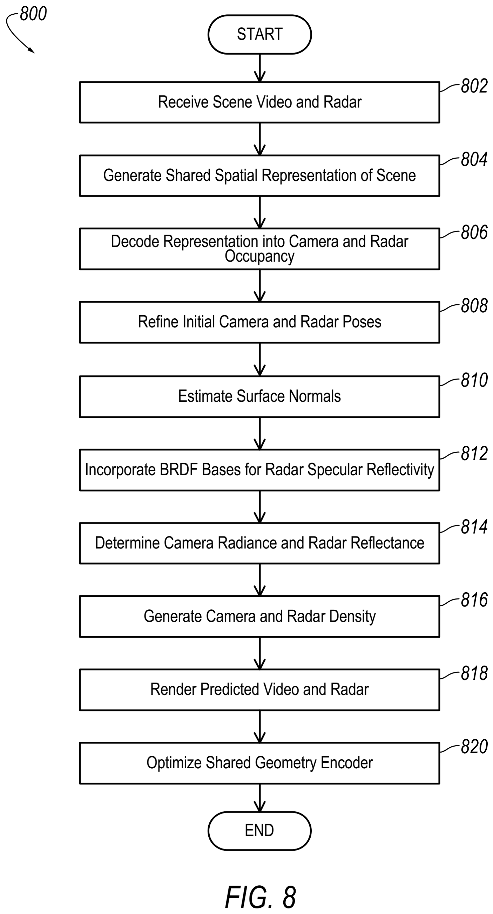

FIG. 8 illustrates an example process 800 for the training of the RadarSim framework 100. In an example, the process 800 may be performed by one or more computing devices as discussed in detail herein.

At operation 802, camera images 102 and corresponding radar images 104 for a scene are received. The camera images 102 are RGB image frames recorded at a specified frame rate, while the radar images 104 include range-Doppler data capturing the depth and motion characteristics of objects in the scene. Example scene data is shown in FIG. 3, where data was collected using the apparatus 200 as illustrated in FIG. 2. The apparatus 200 includes a fisheye camera 202, an mmWave radar 204, and optionally a lidar 206 for scale estimation. The collected data sequences contain thousands of synchronized radar and camera frames that serve as training input for the RadarSim framework 100. In an example, camera poses *A_{c}* may be obtained using SfM techniques such as COLMAP, while radar poses *Aᵣ* may be estimated by interpolating from the camera poses *A_{c},* accounting for time offsets and calibration parameters.

In some examples, operation 802 may include preprocessing of the raw radar and video data before being used in the spatial representation. This could involve normalizing camera images 102, denoising radar images 104 using chi-square distribution-based filtering, and synchronizing frames of the camera images 102 and radar images 104 with precise time alignment.

At operation 804, a shared spatial representation of the scene is generated. This representation is stored in a multi-resolution spatial hash table 404, which encodes volumetric scene features in a structured manner. The spatial representation serves as a foundational layer that allows both radar and camera data to be processed in a unified manner. By encoding both modalities into a common space, the system ensures that geometric information is shared between the radar and camera domains while still allowing for modality-specific reflectance characteristics. The spatial hash table 404 representation enables efficient retrieval of spatial features during training and rendering, facilitating multimodal learning without requiring explicit geometric supervision

At operation 806, the shared spatial representation is decoded into camera occupancy 408 and radar occupancy 416. The geometry decoder 406 processes the encoded spatial features and outputs raw density values that define where objects exist in the scene for each modality. Camera occupancy 408 captures object presence from an optical perspective, while radar occupancy 416 accounts for radar wave propagation and reflection characteristics. Because radar and camera perceive scene geometry differently due to differences in wavelength, material reflectance, and transmission properties the decoding process includes an adaptive transformation that offsets radar density based on camera density, ensuring that the radar occupancy 416 remains consistent with physical scene constraints. This approach helps mitigate radar-specific artifacts such as multi-path reflections and inter-reflections that could otherwise distort the reconstructed scene.

At operation 808, the initial camera and radar poses are refined through an optimization process that estimates per-frame pose and velocity offsets. In an example, the pose offsets *Δx_{c}, ΔR_{c}, Δv_{c}* may be refined via *L*₂ regularization to prevent excessive deviation from initial estimates, velocity consistency constraints to ensure alignment with position derivatives, acceleration constraints to enforce physical plausibility, and/or kinematic loss to ensure estimated velocities are consistent with integrated positions. The pose optimization scheme may be shared across both camera and radar modalities, ensuring that refined radar poses are interpolated from refined camera poses. Thus, small adjustments (offsets) to position *x_{c},* rotation *R_{c}*, and velocity *v_{c}* may be introduced to correct the initial poses for noise, synchronization errors, or sensor drift.

At operation 810, the surface normals 426 are estimated. For example, the normal MLP 604 may be applied to the geometry code produced by the geometry decoder 406 to predict surface normals 426 at each spatial location.

At operation 812, BRDF bases 430 are incorporated for radar specular reflectivity. As shown above, various BRDF bases 430 functions ${e}^{- \frac{1}{ρ} x}$ may be used for different surface roughness values p.

At operation 814, the color MLP 410 is applied to the decoded camera occupancy to determine camera radiance information 412, and the radar MLP 418 is applied to the decoded radar occupancy to determine radar reflectance information 420 using the BRDF bases 430. The color MLP 410 models light-based radiance for camera volumetric rendering 414 (and optionally surface normals 426 based shading if desired, e.g., for advanced rendering effects), while the radar MLP 418 models reflectance information 420 based on radar wave propagation, material interaction, and predicted surface normal 426. These separate reflectance heads allow the RadarSim framework 100 to account for modality-specific properties, such as wavelength-dependent surface interactions, transmission effects, and interreflections unique to radar and RGB measurements. It should be noted that operations 808, 810, 812, 814 may be performed in a single forward pass, despite being broken out for clarity.

At operation 816, camera and radar density values are generated. The geometry decoder 406 outputs finalized camera density *α_{c}*(*x*) and finalized radar density *αᵣ*(*x*), which define the probability of a point in space contributing to the final rendered image or radar measurement. Camera density is derived from standard volumetric rendering principles, while radar density is computed based on radar-specific wave propagation models. The radar density formulation accounts for the attenuation of radar waves, their two-way transmission effects, and inverse squared fall-off in reflected energy. The learned radar density function is useful for accurately simulating radar measurements while aligning with the camera-derived scene structure. Additionally, the process 800 may apply a shared proposal network to guide importance sampling for both camera and radar rays, improving computational efficiency and ensuring that training focuses on informative regions of the scene.

At operation 818, predicted camera images 102 and radar images 104 are rendered. In an example, the camera volumetric rendering 414 synthesizes predicted video frames by integrating radiance information 412 values along camera rays, using the computed camera density to determine blending weights. This process ensures that the reconstructed camera frames match the observed training data while preserving high-resolution details. In an example, the radar rendering 422 follows a different approach, integrating the reflectance information 420 along a conical range-Doppler sampling path to simulate how radar signals interact with the scene. The rendered outputs are then compared against the ground-truth training data using multimodal reconstruction loss functions, ensuring that the learned neural field accurately captures both camera-based and radar-based scene properties. Because radar images 104 contain noise, in some examples, operation 816 may include denoising (e.g., thresholding using a fitted chi-square distribution) applied before computing loss metrics such as PSNR and SSIM.

At operation 820, the shared geometry encoder is optimized. The optimization process updates the parameters of the multi-resolution spatial hash table 404, the geometry decoder 406, the color MLP 410, the radar MLP 418, and the normal MLP 428, based on a multimodal loss function. The loss function includes *L*₂ reconstruction loss for RGB camera images 102, *L*₁ reconstruction loss for radar images 104, the surface normal 426 supervision loss *Lₙₒᵣₘₐₗ,* pose refinement loss *Lₚₒₛₑ* (to optimize *Δx_{c}, ΔR_{c},* and *Δv*_{c})*,* and proposal loss terms for training the shared proposal network. Additionally, a sparsity regularization term encourages compact scene representations, preventing the network from encoding redundant or noisy features. During optimization, backpropagation updates both the scene representation and the reflectance properties, ensuring that the model generalizes well to novel viewpoints and radar configurations. The trained multimodal model enables super-resolution radar simulations 106, where high-resolution RGB data implicitly enhances radar-based depth and reflectance modeling. After operations 820, the process 800 ends.

Once trained using the process 800, the trained multimodal network may be deployed for real-time scene reconstruction in various applications. One example application is automotive perception for autonomous or assisted driving. The trained model may be integrated into a vehicle's sensor fusion system, where it receives live radar and camera data from onboard sensors. The RadarSim framework 100 processes the incoming sensor data to generate enhanced range-Doppler representations, improving object detection and environmental awareness under adverse conditions such as low visibility, nighttime, fog, or heavy rain. The network refines depth estimates from radar while preserving high-resolution spatial details from RGB cameras, enabling more accurate lane detection, pedestrian tracking, and vehicle recognition. The system may also be used for simulating radar reflections in virtual testing environments, allowing automotive manufacturers to train and validate sensor fusion models in diverse weather and traffic conditions before deploying them in real-world scenarios.

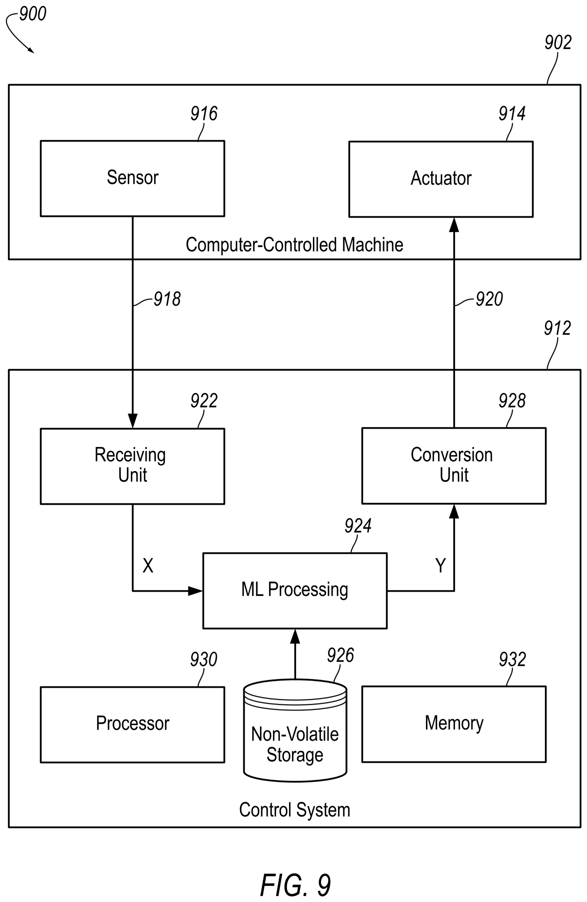

FIG. 9 illustrates an example application of the RadarSim framework 100 by a control system 912 for controlling a computer-controlled machine 902. The control system 912 may be configured to receive sensor signals 918 from one or more sensors 916, process the signals, and provide actuator control commands 920 to control one or more one or more actuators 914 in response. The computer-controlled machine 902 may include the one or more actuators 914 and one or more sensors 916. In other examples, the control system 912 may include one or more of the actuators 914 and/or the sensors 916.

The actuators 914 may be configured to control various aspects of the computer-controlled machine 902. As some non-limiting examples, the actuators 914 may include one or more of a servo motor, a stepper motor, a linear actuator, a solenoid, a pneumatic actuator, a hydraulic actuator, a piezoelectric actuator, a voice coil actuator, a user interface screen, etc.

The sensors 916 may be configured to sense conditions of the computer-controlled machine 902. The sensors 916 may be configured to encode the sensed condition into sensor signals 918 and to transmit sensor signals 918 to control system 912. Non-limiting examples of sensor 916 include cameras 202, radars 204, microphones, accelerometers, and the like.

The control system 912 includes a receiving unit 922 configured to receive the sensor signals 918 from the sensor 916 and to transform the sensor signals 918 into input signals X. In an alternative example, the sensor signals 918 may be received directly as input signals X without the receiving unit 922. Each input signal X may include at least a portion of each sensor signal 918. For example, the input signal X may include a scene of camera images 102 and radar images 104. In such an example, each input signal X may include data corresponding to RGB and radar recorded by the sensors 916 for a discrete time period.

The control system 912 further includes machine learning (ML) processing 924. The ML processing 924 may be configured to analyze the input signal X to determine whether actions should be performed by the control system 912. In an example, the ML processing 924 may include modeling the environment based on camera images 102 and radar images 104. Based on the modeling, the control system 912 may determine output signals Y to control the one or more actuators 914.

The control system 912 further includes a conversion unit 928 that converts the output signals Y into actuator control commands 920. These actuator control commands 920 may then be provided to the actuators 914, which therefore actuate the computer-controlled machine 902 in response to actuator control commands 920. In other examples, the actuator 914 is configured to actuate computer-controlled machine 902 based directly on the output signals Y.

Upon receipt of the actuator control commands 920 by actuator 914, the actuator 914 is configured to execute an action to control the computer-controlled machine 902. For example, the actuator 914 may turn on or off one or more components, adjust one or more settings of the computer-controlled machine 902, etc. In some examples, the actuator control commands 920 may also be utilized to control a display to inform of the conditions and/or output signals Y identified by the RadarSim framework 100.

The control system 912 also includes one or more processors 930, memories 932, and non-volatile storage 926 to perform the operations of the receiving unit 922, the RadarSim framework 100, and the conversion unit 928.

The non-volatile storage 926 may include one or more persistent data storage devices such as a hard drive, optical drive, tape drive, non-volatile solid-state device, cloud storage or any other device capable of persistently storing information. The processor 930 may include one or more devices such as high-performance computing (HPC) systems including high-performance cores, microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on computer-executable instructions residing in memory 932. The memory 932 may include a single memory device or a number of memory devices including, but not limited to, random access memory (RAM), volatile memory, non-volatile memory, static random access memory (SRAM), dynamic random access memory (DRAM), flash memory, cache memory, or any other device capable of storing information.

Upon execution by processor 930, the computer-executable instructions of non-volatile storage 926 may cause control system 912 to implement one or more of the ML algorithms and/or methodologies as disclosed herein. Non-volatile storage 926 may also include ML data (including data parameters) supporting the functions, features, and processes of the one or more embodiments described herein.

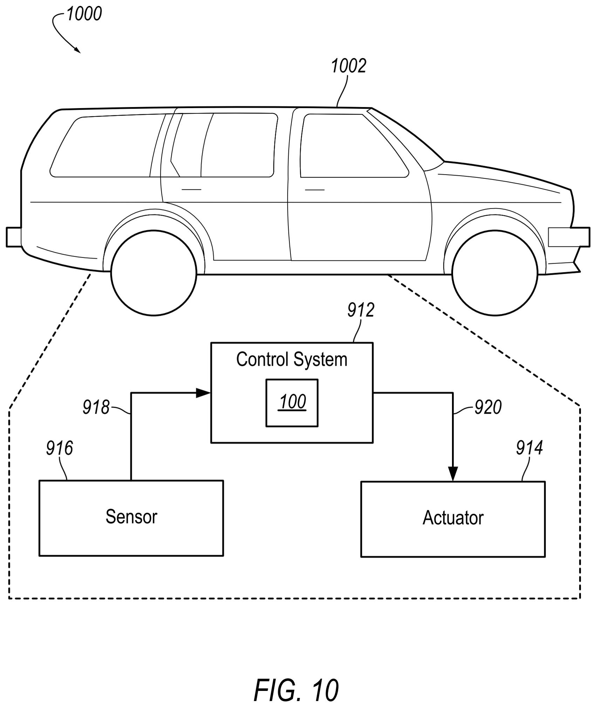

FIG. 10 illustrates a schematic diagram 1000 of the control system 912 configured to control a vehicle 1002, which may be an at least partially autonomous vehicle or an at least partially autonomous robot. As shown in FIG. 10, the vehicle 1002 includes an actuator 914 and a sensor 916. The sensor 916 may include one or more cameras 202, radars 204, and/or position sensors (e.g., global navigation satellite system (GNSS)). One or more of the one or more specific sensors may be integrated into the vehicle 1002.

The ML processing 924 of the control system 912 of the vehicle 1002 may be configured to detect objects in the vicinity of the vehicle 1002 dependent on input signals X. In such an embodiment, output signal Y may include information characterizing the vicinity of objects to the vehicle 1002. An actuator control command 920 may be determined in accordance with this information. In embodiments where the vehicle 1002 is an at least partially autonomous vehicle, the actuator 914 may be embodied in a brake, a propulsion system, an engine, a drivetrain, or a steering of the vehicle 1002. The actuator control commands 920 may be determined such that the actuator 914 is controlled such that the vehicle 1002 avoids collisions with detected objects.

The program code embodying the algorithms and/or methodologies described herein is capable of being individually or collectively distributed as a program product in a variety of different forms. The program code may be distributed using a computer readable storage medium having computer readable program instructions thereon for causing a processor to carry out aspects of one or more embodiments. Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions, acts, and/or operations specified in the flowcharts or diagrams. In certain alternative embodiments, the functions, acts, and/or operations specified in the flowcharts and diagrams may be re-ordered, processed serially, and/or processed concurrently consistent with one or more embodiments. Moreover, any of the flowcharts and/or diagrams may include more or fewer nodes or blocks than those illustrated consistent with one or more embodiments.

The processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

The processes, methods, or algorithms disclosed herein can be deliverable to/implemented by a processing device, controller, or computer, which can include any existing programmable electronic control unit or dedicated electronic control unit. Similarly, the processes, methods, or algorithms can be stored as data and instructions executable by a controller or computer in many forms including, but not limited to, information permanently stored on non-writable storage media such as read-only memory (ROM) devices and information alterably stored on writeable storage media such as floppy disks, magnetic tapes, compact discs (CDs), RAM devices, and other magnetic and optical media. The processes, methods, or algorithms can also be implemented in a software executable object. Alternatively, the processes, methods, or algorithms can be embodied in whole or in part using suitable hardware components, such as ASICs, FPGAs, state machines, controllers or other hardware components or devices, or a combination of hardware, software and firmware components.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to strength, durability, life cycle, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

## Claims

1. A computer-implemented method for training a multimodal network, the method comprising:
receiving synchronized camera images and radar images captured from a scene;
generating a shared spatial representation of the scene by encoding spatial features into a spatial hash table of a shared geometry encoder;
decoding the shared spatial representation using a geometry decoder to produce camera occupancy and radar occupancy values;
refining initial camera and radar poses through an optimization that estimates per-frame pose and velocity offsets;
predicting, via a normal multilayer perceptron (MLP), surface normals at spatial locations of the scene based on the shared spatial representation;
applying one or more bidirectional reflectance distribution function (BRDF) bases to model radar reflectance as a function of the predicted surface normals;
applying a color MLP to the shared geometry encoder to determine camera radiance and applying a radar MLP to the shared geometry encoder to determine the radar reflectance using the BRDF bases and the predicted surface normals;
optimizing the shared geometry encoder based on a multimodal loss function, wherein the multimodal loss function comprises a first reconstruction loss term for predicted camera images rendered from camera density and camera radiance, a second reconstruction loss term for predicted radar images rendered from radar density and radar reflectance, a proposal loss term to enforce consistency across multimodal ray samplings, a sparsity constraint to encourage compact geometry representations, a normal-supervision loss term that compares the predicted surface normals to pseudo-ground-truth normals derived from the camera images, and a pose refinement loss to optimize the pose and velocity offsets; and
outputting the trained multimodal network for use in high resolution radar simulation in response to optimizing the multimodal loss function.

2. The method of claim 1, wherein the pose refinement loss includes *L*₂ regularization on the pose and velocity offsets.

3. The method of claim 1, wherein the pose refinement loss includes *L*₂ loss to enforce velocity towards derivate of position.

4. The method of claim 1, wherein the pose refinement loss includes *L*₂ regularization on acceleration.

5. The method of claim 1, wherein the pose refinement loss includes kinematic loss.

6. The method of claim 1, further comprising applying a transformation to the initial camera poses as derived from a structure-from-motion algorithm to estimate the initial radar poses, wherein the transformation accounts for time synchronization offsets between camera and radar modalities.

7. The method of claim 1, wherein the BRDF bases are further modeled as a function of one or more of viewing angle and a material roughness parameter.

8. The method of claim 1, further comprising:
generating the camera density and the radar density by applying a density decoding function to the spatial representation;
rendering the predicted camera images from the camera density and camera radiance via camera volumetric rendering; and
rendering the predicted radar images from the radar density and radar reflectance via radar volumetric rendering.

9. The method of claim 1, wherein the BRDF bases comprise exponential basis functions of a surface-normal dot-product, each basis function corresponding to a distinct surface-roughness parameter.

10. The method of claim 1, wherein the captured radar images include range-Doppler measurements, and the radar volumetric rendering integrates radar reflectance values along a conical integration path to account for Doppler shift effects.

11. The method of claim 1, wherein the spatial hash table stores geometry feature codes, and wherein the geometry decoder is a neural network that separately outputs camera density and radar density values from the shared geometry encoder.

12. The method of claim 1, further comprising:
training a proposal network to predict sampling distributions for radar and camera rays; and
supervising the proposal network with a proposal loss function that penalizes underestimation of a true rendering weight distribution for both radar and camera modalities, wherein the proposal network generates separate sampling distributions for the radar and camera modalities while maintaining a shared feature representation for geometry.

13. The method of claim 1, further comprising one or more of:
removing noise artifacts from proposed radar images using a noise threshold determined from a chi-square distribution of empty Doppler bins; and
evaluating model performance using peak signal-to-noise ratio (PSNR) and structural similarity index (SSIM) metrics.

14. The method of claim 1, wherein the shared geometry encoder is trained to optimize for both high-fidelity red-green-blue (RGB) image rendering and radar-specific depth and reflectance modeling without requiring explicit geometric supervision.

15. The method of claim 1, wherein the radar volumetric rendering computes radar return amplitudes by integrating over radar reflectance values weighted by the radar density and a learned radar gain function.

16. The method of claim 1, further comprising using the trained multimodal network to enhance object detection and depth estimation in autonomous vehicles by generating high-resolution radar reflectance maps.

17. A system for training a multimodal network for multimodal scene reconstruction, the system comprising:
a memory configured to store synchronized camera images and radar images captured from a scene; and
one or more computing devices configured to:
generate a shared spatial representation of the scene by encoding spatial features into a spatial hash table of a shared geometry encoder,
decode the shared spatial representation using a geometry decoder to produce camera occupancy and radar occupancy values,
refining camera and radar poses obtained using Structure-from-Motion (SfM) techniques through an optimization process that estimates per-frame pose and velocity offsets,
predicting, via a normal MLP, surface normals at spatial locations of the scene based on the shared spatial representation,
apply one or more BRDF bases to model radar reflectance as a function of the predicted surface normals,
apply a color MLP to the shared geometry encoder to determine camera radiance and applying a radar MLP to the shared geometry encoder to determine the radar reflectance using the BRDF bases and the predicted surface normal, and
optimize the shared geometry encoder based on a multimodal loss function, wherein the multimodal loss function comprises a first reconstruction loss term for predicted camera images rendered from camera density and camera radiance, a second reconstruction loss term for predicted radar images rendered from radar density and radar reflectance, a proposal loss term to enforce consistency across multimodal ray samplings, a sparsity constraint to encourage compact geometry representations, a normal-supervision loss term that compares the predicted surface normals to pseudo-ground-truth normals derived from the camera images, and a pose refinement loss to optimize the pose and velocity offsets, and
output the trained multimodal network for use in high resolution radar simulation in response to optimizing the multimodal loss function.

18. The system of claim 17, wherein the pose refinement loss includes *L*₂ regularization on the pose and velocity offsets.

19. The system of claim 17, wherein the pose refinement loss includes *L*₂ loss to enforce velocity towards derivate of position.

20. The system of claim 17, wherein the pose refinement loss includes *L*₂ regularization on acceleration.

21. The system of claim 17, wherein the pose refinement loss includes kinematic loss.

22. The system of claim 17, wherein the one or more computing devices are further configured to apply a transformation to the initial camera poses as derived from a structure-from-motion algorithm to estimate the initial radar poses, wherein the transformation accounts for time synchronization offsets between camera and radar modalities.

23. The system of claim 17, wherein the BRDF bases are further modeled as a function of one or more of viewing angle and a material roughness parameter.

24. The system of claim 17, wherein the one or more computing devices are further configured to:
generate the camera density and the radar density by applying a density decoding function to the spatial representation;
render the predicted camera images from the camera density and camera radiance via camera volumetric rendering; and
render the predicted radar images from the radar density and radar reflectance via radar volumetric rendering.

25. The system of claim 17, wherein the BRDF bases comprise exponential basis functions of a surface-normal dot-product, each basis function corresponding to a distinct surface-roughness parameter.

26. The system of claim 17, wherein the captured radar images include range-Doppler measurements, and the radar volumetric rendering integrates radar reflectance values along a conical integration path to account for Doppler shift effects.

27. The system of claim 17, wherein the spatial hash table stores geometry feature codes, and wherein the geometry decoder is a neural network that separately outputs camera density and radar density values from the shared geometry encoder.

28. The system of claim 17, wherein the one or more computing devices are further configured to:
train a proposal network to predict sampling distributions for radar and camera rays; and
supervise the proposal network with a proposal loss function that penalizes underestimation of a true rendering weight distribution for both radar and camera modalities,
wherein the proposal network generates separate sampling distributions for the radar and camera modalities while maintaining a shared feature representation for geometry.

29. The system of claim 17, wherein the shared geometry encoder is trained to optimize for both high-fidelity RGB image rendering and radar-specific depth and reflectance modeling without requiring explicit geometric supervision.

30. The system of claim 17, wherein the radar volumetric rendering computes radar return amplitudes by integrating over radar reflectance values weighted by the radar density and a learned radar gain function.

31. The system of claim 17, wherein the one or more computing devices are further configured to use the trained multimodal network to enhance object detection and depth estimation in autonomous vehicles by generating high-resolution radar reflectance maps.

32. A non-transitory computer-readable medium comprising instructions for training a multimodal scene reconstruction that, when executed by one or more computing devices, cause the one or more computing devices to perform operations including to:
generate a shared spatial representation of the scene by encoding spatial features into a spatial hash table of a shared geometry encoder;
decode the shared spatial representation using a geometry decoder to produce camera occupancy and radar occupancy values;
refining camera and radar poses obtained using Structure-from-Motion (SfM) techniques through an optimization process that estimates per-frame pose and velocity offsets;
predicting, via a normal MLP, surface normals at spatial locations of the scene based on the shared spatial representation;
apply one or more BRDF bases to model radar reflectance as a function of the predicted surface normal, a viewing angle, and a material roughness parameter;
apply a color MLP to the shared geometry encoder to determine camera radiance and applying a radar MLP to the shared geometry encoder to determine the radar reflectance using the BRDF bases and the predicted surface normal;
generate camera density and radar density by applying a density decoding function to the spatial representation;
render predicted camera images from the camera density and camera radiance via camera volumetric rendering;
render predicted radar images from the radar density and radar reflectance via radar volumetric rendering;
optimize the shared geometry encoder based on a multimodal loss function, wherein the multimodal loss function comprises a first reconstruction loss term for the predicted camera images, a second reconstruction loss term for the predicted radar images, a proposal loss term to enforce consistency across multimodal ray samplings, a sparsity constraint to encourage compact geometry representations, a normal-supervision loss term that compares the predicted surface normals to pseudo-ground-truth normals derived from the camera images, and a pose refinement loss to optimize the pose and velocity offsets; and
output the trained multimodal network for use in high resolution radar simulation in response to optimizing the multimodal loss function.
